# EUROPÄISCHE PATENTSCHRIFT

(11) **EP 2 200 773 B1**
(45) Veröffentlichungstag und Bekanntmachung des Hinweises auf die Patenterteilung: **24.07.2013**
(21) Anmeldenummer: 08804197.5
(22) Anmeldetag: 15.09.2008
(51) Int. Cl.: B23B 51/00, B23C 5/00

(54) **NUR TEILWEISE GESCHLIFFENER WERKZEUGSTAB AUS SINTERMATERIAL**
ONLY PARTLY GROUND TOOL ROD MADE OF SINTERED MATERIAL
TIGE D'OUTIL EN MATÉRIAU FRITTÉ SEULEMENT PARTIELLEMENT AFFÛTÉE

(30) Priorität: 17.09.2007 DE 102007044269
(43) Veröffentlichungstag der Anmeldung: 30.06.2010
(73) Patentinhaber: Friedrichs, Arno, 95326 Kulmbach (DE)
(72) Erfinder: Friedrichs, Arno, 95326 Kulmbach (DE)
(74) Vertreter: Eichstädt, Alfred
(86) Internationale Anmeldenummer: PCT/EP2008/062236
(87) Internationale Veröffentlichungsnummer: WO 2009/037223

(56) Entgegenhaltungen:
- DE-A1- 3 601 385
- DE-A1- 3 636 798
- DE-U1- 9 313 618
- US-A- 4 642 003
- US-A- 5 701 578

## Beschreibung

Die vorliegende Erfindung betrifft ein Herstellungsverfahren für einen aus gesintertem Material bestehenden gebrauchsfertigen Werkzeugstab. Die vorliegende Erfindung betrifft weiterhin einen derartigen Werkzeugstab sowie eine Verwendung für einen derartigen Werkzeugstab.

Werkzeugstäbe aus Sintermaterial sind allgemein bekannt. Sie werden in der Regel wie folgt hergestellt:
- Aus dem zu sinternden Material wird ein Formling hergestellt, der eine Längsachse aufweist.
- In den Formling wird mindestens eine von der Längsachse beabstandete, entlang der Längsachse verlaufende Spankammer eingebracht.
- Durch Sintern des Formlings wird der Werkzeugstab hergestellt.
- Durch Schleifen wird in den Werkzeugstab mindestens eine an die Spankammer angrenzende Schneidkante eingebracht und der Werkzeugstab durch Schleifen weiter bearbeitet.

Ein derartiges Herstellungsverfahren und der hiermit korrespondierende Werkzeugstab ist beispielsweise aus der DE 101 42 265 A1 bzw. der korrespondierenden US 7,226,254 B2 bekannt.

Bei dem bekannten Herstellungsverfahren sollen in den Werkzeugstab Kanäle eingebracht werden, die im Spankammerbereich helixartig um die Längsachse des Werkzeugstabes umlaufen. Die Kanäle können beispielsweise zum Zuführen eines Schmier- und/oder Kühlmediums zur Bohrerspitze eines Bohrers verwendet werden. Eine derartige Ausgestaltung ist auch im Rahmen der vorliegenden Erfindung möglich. Sie ist jedoch nicht erforderlich.

Während des Sintervorgangs schrumpft der Formling, wobei das exakte Ausmaß der Schrumpfung schwer vorhersagbar ist. Aus diesem Grund wird der Formling derart dimensioniert, dass der gesinterte Werkzeugstab ein Übermaß aufweist. Das Übermaß wird durch den Schleifvorgang abgetragen.

Nach dem Sintern ist der Werkzeugstab sehr hart und nur schwer bearbeitbar. Die Bearbeitung ist daher aufwändig.

Aus der DE 36 36 798 C2 ist ein Werkzeugstab bekannt, bei dem die Spankammern überhaupt nicht bearbeitet werden.

Aus der EP 0 950 125 B1 ist ein gesinterter Werkzeugstab bekannt, bei dem nach einem Vorsintervorgang von ausgewählten Bereichen Material abgeschliffen wird. Die ausgewählten Bereiche umfassen unter anderem die Spannuten des Werkzeugstabes.

Die Aufgabe der vorliegenden Erfindung besteht darin, ein Herstellungsverfahren für einen aus Sintermaterial bestehenden Werkzeugstab und den hiermit korrespondierenden Werkzeugstab zu schaffen, bei denen der Aufwand zur Herstellung des Werkzeugstabes reduziert ist. Weiterhin soll eine geeignete Verwendung für diesen Werkzeugstab angegeben werden.

Die Aufgabe wird durch ein Herstellungsverfahren mit den Merkmalen des Anspruchs 1, einen Werkzeugstab mit den Merkmalen des Anspruchs 6 und eine Verwendung gemäß Anspruch 12 gelöst. Vorteilhafte Ausgestaltungen des Herstellungsverfahrens sind Gegenstand der abhängigen Ansprüche 2 bis 5. Vorteilhafte Ausgestaltungen des Werkzeugstabes sind Gegenstand der abhängigen Ansprüche 7 bis 11.

Erfindungsgemäß wird die Spankammer des Werkzeugstabes ausschließlich in einem Bereich geschliffen, der an mindestens eine der Schneidkanten angrenzt, und bleibt im Übrigen ungeschliffen. Durch diese Maßnahme kann der Fertigungsaufwand zur Herstellung des Werkzeugstabes reduziert werden, ohne dessen Gebrauchseigenschaften negativ zu beeinflussen.

Beispielsweise kann mindestens eine der Schneidkanten stirnseitig des Werkzeugstabes verlaufen. In diesem Fall wird die Spankammer, soweit sie an diese Schneidkante angrenzt, in Richtung der Längsachse gesehen vorzugsweise über eine Länge geschliffen, die zwischen der Hälfte und dem Doppelten des Durchmessers des Werkzeugstabes liegt. Die Länge kann insbesondere zwischen dem 0,8-fachen und dem 1,2-fachen des Durchmessers des Werkzeugstabes liegen. Der Werkzeugstab kann bei dieser Ausgestaltung insbesondere als Bohrer ausgebildet sein. Die stirnseitige Schneidkante ist in diesem Fall an der Bohrerspitze angeordnet.

Alternativ oder zusätzlich ist es möglich, dass mindestens einer der Schneidkanten entlang der Längsachse des Werkzeugstabes verläuft. In diesem Fall wird die Spankammer, soweit sie an diese Schneidkante angrenzt, vorzugsweise nur in einem an diese Schneidkante unmittelbar angrenzenden Bereich geschliffen.

Die entlang der Längsachse verlaufende Schneidkante ist von zwei Grenzflächen begrenzt. Die eine der Grenzflächen begrenzt zugleich die Spankammer, die andere der Grenzflächen begrenzt die Spankammer nicht. Im Regelfall wird die andere Grenzfläche geschliffen. In manchen Ausgestaltungen ist es jedoch möglich, dass (auch) die andere Grenzfläche zumindest teilweise nicht geschliffen wird.

Als Sintermaterial wird in der Regel ein Metall verwendet, insbesondere ein Hartmetall. Alternativ ist die Verwendung einer Metall-Keramik-Mischung möglich. Derartige Materialien sind unter dem Begriff "Cermet" bekannt.

Wie bereits erwähnt, ist der Werkzeugstab, bei dem die Spankammer ausschließlich in einem Bereich, der an mindestens eine Spankammer angrenzt, geschliffen ist und im Übrigen ungeschliffen ist, vollständig gebrauchsfertig. Die typische Verwendung dieses Werkzeugstabes besteht darin, mit ihm eine spanende Bearbeitung eines Werkstücks vorzunehmen.

Weitere Vorteile und Einzelheiten ergeben sich aus der nachfolgenden Beschreibung von Ausführungsbeispielen in Verbindung mit den Zeichnungen. Hierbei zeigen in Prinzipdarstellung:
- Figur 1: schematisch ein Herstellungsverfahren zum Herstellen eines erfindungsgemäßen Werkzeugstabes,
- Figur 2: schematisch einen spanenden Bearbeitungsvorgang,
- Figuren 3 bis 7: verschiedene Ansichten eines als Bohrer ausgebildeten Werkzeugstabes und
- Figuren 8 bis 10: zwei verschiedene Ausgestaltungen eines als Fräskopf ausgebildeten Werkzeugstabes.

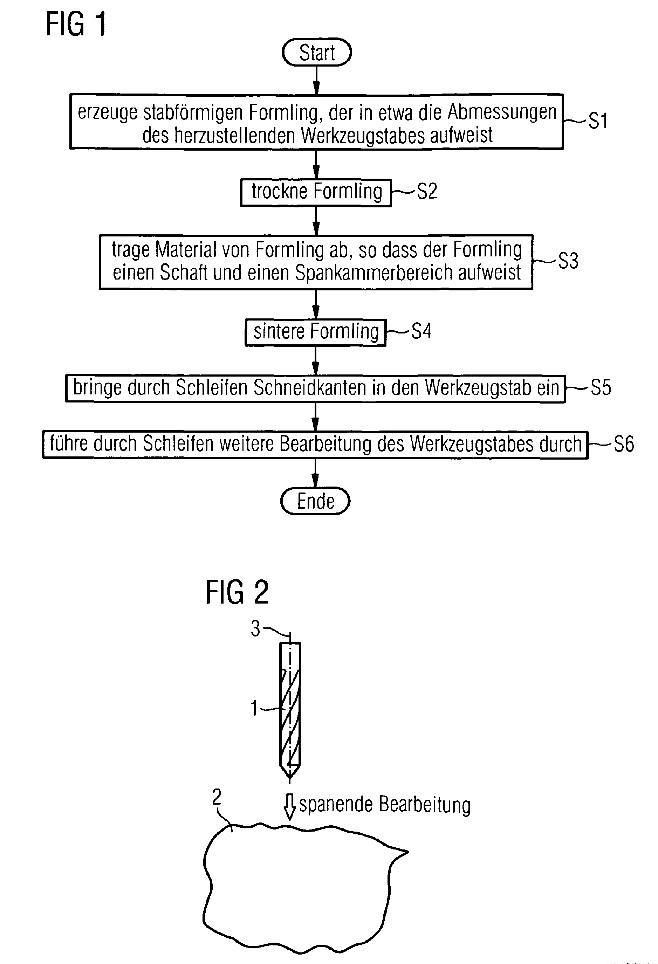

Zum Herstellen eines erfindungsgemäßen Werkzeugstabes wird gemäß Figur 1 zunächst in einem Schritt S1 ein stabförmiger Formling erzeugt, der in etwa die Länge und den Durchmesser des herzustellenden Werkzeugstabes aufweist. Der Formling wird hierbei - beispielsweise durch Extrudieren - aus einer pastösen Masse erzeugt, die aus einem noch zu sinternden Material besteht, das mit einem Bindemittel vermischt ist. Das zu sinternde Material kann beispielsweise ein Metallpulver sein, insbesondere ein Hartmetallpulver. Alternativ kann das zu sinternde Material eine Mischung eines Metallpulvers mit einem Keramikpulver sein.

Nach dem Herstellen des Formlings wird der Formling in einem Schritt S2 getrocknet. Das Bindemittel verdunstet oder verdampft hierbei. Der getrocknete Formling ist spröde, aber noch relativ leicht zu bearbeiten. Es wird in einem Schritt S3 Material von dem Formling abgetragen, so dass er einen Schaft und einen Spankammerbereich aufweist. Der Schaft ist dadurch charakterisiert, dass er quer zur Längsachse gesehen einen konvexen (in der Regel runden) Querschnitt aufweist. Der Spankammerbereich ist dadurch charakterisiert, dass er mindestens eine Spankammer aufweist. Auf Grund des Vorhandenseins der Spankammer weist der Spankammerbereich quer zur Längsachse gesehen einen Querschnitt auf, der stellenweise konvex und stellenweise konkav ist.

In einem Schritt S4 wird der im Schritt S3 hergestellte Formling gesintert und so ein Werkzeugstab hergestellt. Der Formling schrumpft während des Sinterns. Das exakte Ausmaß, um das der Formling beim Sintern schrumpft, ist Schwankungen unterworfen.

Auf Grund der Schwankungen des Schrumpfungsvorgangs muss der Formling derart dimensioniert werden, dass er nach dem Sintern ein Übermaß aufweist. Somit ist nach dem Sintern eine Nachbearbeitung des Werkzeugstabes erforderlich. Diese Nachbearbeitung erfolgt in Schritten S5 und S6. Die Reihenfolge der Schritte S5 und S6 ist beliebig.

Gemäß Figur 1 werden in den Werkzeugstab im Schritt S5 Schneidkanten eingebracht. Die Anzahl an eingebrachten Schneidkanten ist nach Bedarf wählbar. Pro Spankammer wird mindestens eine Schneidkante eingebracht. Jede Schneidkante grenzt an eine Spankammer an. Das Einbringen der Schneidkanten in den Werkzeugstab erfolgt durch Schleifen.

Im Schritt S6 wird der Werkzeugstab durch Schleifen weiter bearbeitet. Insbesondere wird ein Übermaß des Werkzeugstabes abgetragen. Die Spankammer wird jedoch nur teilweise geschliffen. Im Übrigen bleibt sie ungeschliffen. Diese Vorgehensweise steht im Gegensatz zum Stand der Technik, bei dem in der Regel die gesamte Spankammer geschliffen wird.

Nach Beenden des Schrittes S6 ist der so hergestellte Werkzeugstab gebrauchsfertig. Insbesondere kann mittels des so hergestellten Werkzeugstabes gemäß Figur 2 eine spanende Bearbeitung eines Werkstücks erfolgen. Der Werkzeugstab ist in Figur 2 mit dem Bezugszeichen 1 versehen, das Werkstück mit dem Bezugszeichen 2. Das Werkstück 2 besteht beispielsweise aus einem Holzwerkstoff oder aus Metall.

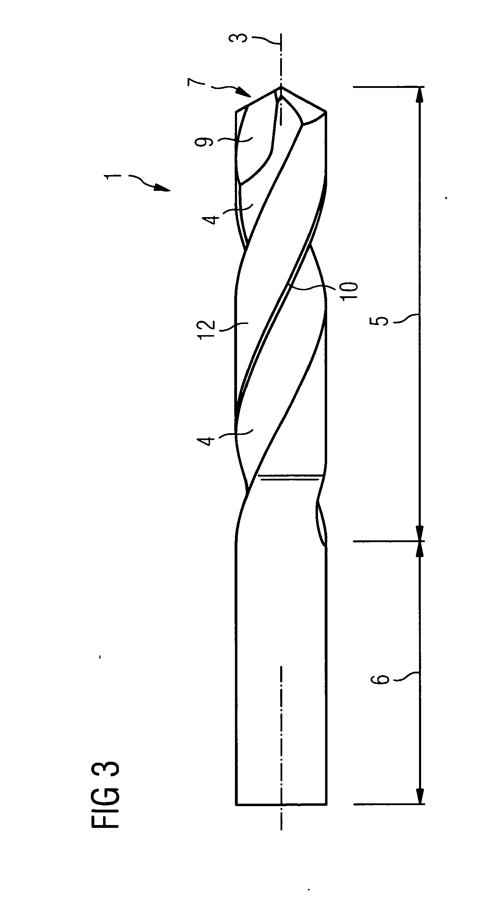

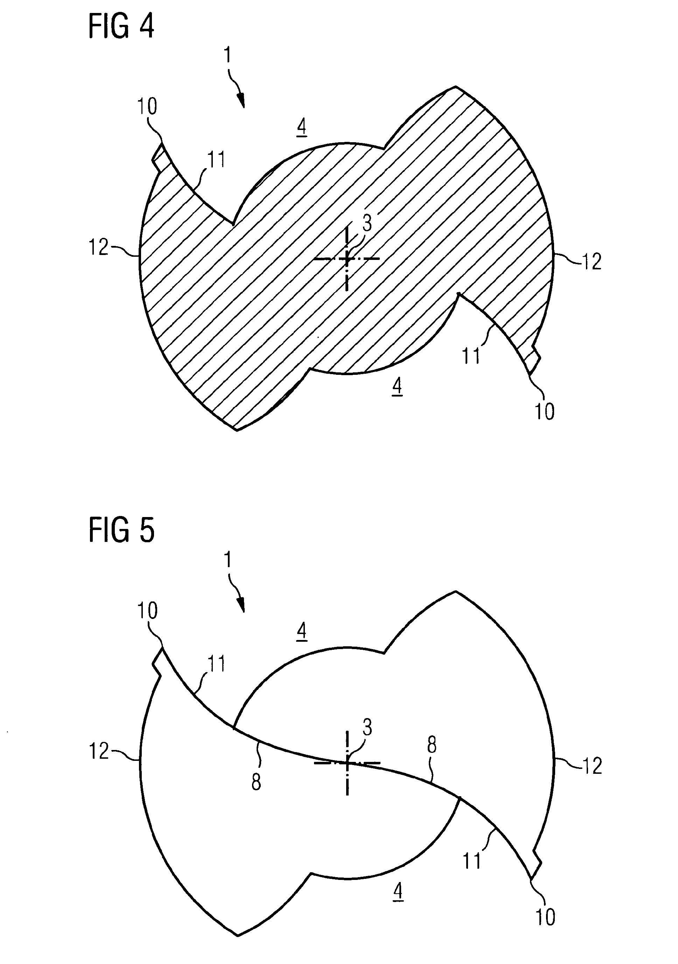

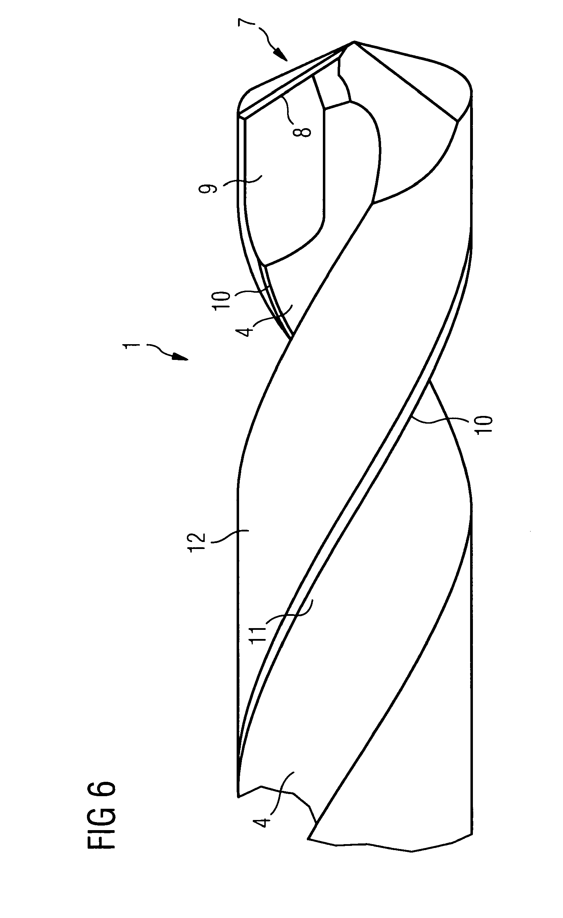

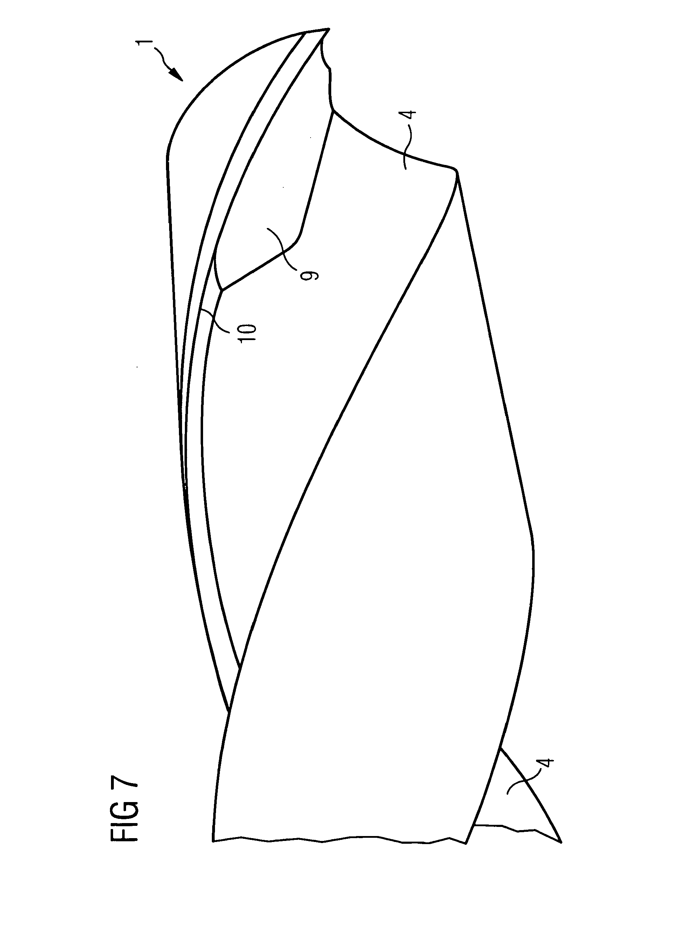

Die erfindungsgemäße Ausgestaltung des Werkzeugstabes 1 wird nachfolgend in Verbindung mit den Figuren 3 bis 7 für einen als Bohrer ausgebildeten Werkzeugstab 1 nochmals erläutert. Figur 3 zeigt eine Gesamtansicht des Werkzeugstabes 1, Figur 4 einen Querschnitt durch den Werkzeugstab 1 im Spankammerbereich, Figur 5 eine Gestaltung der Bohrerspitze des Werkzeugstabes 1, Figur 6 eine vergrößerte Darstellung des Spankammerbereichs des Werkzeugstabes von Figur 3 und Figur 7 einen Ausschnitt von Figur 6.

Gemäß den Figuren 3 bis 7 weist der Werkzeugstab 1 eine Längsachse 3 auf. Von der Längsachse 3 beabstandet verläuft mindestens eine Spankammer 4. Gemäß den Figuren 3 bis 7 sind zwei Spankammern 4 vorhanden, die einander bezüglich der Längsachse 3 diametral gegenüber liegen. Weder die Anzahl der Spankammern 4 noch deren Anordnung bezüglich der Längsachse 3 ist jedoch zwingend. Entscheidend ist nur, dass mindestens eine Spankammer 4 vorhanden ist. Weiterhin sind in der Regel die Spankammern 4 gleich ausgebildet. Zwingend ist dies jedoch nicht erforderlich.

Auf Grund der Ausbildung des Werkzeugstabes 1 der Figuren 3 bis 7 als Bohrer verlaufen die Spankammern 4 spiralförmig um die Längsachse 3 herum. Dies ist jedoch nicht zwingend. Die Spankammern 4 könnten alternativ einen nur leichten Drall aufweisen oder vollständig parallel zur Längsachse 3 verlaufen. Entscheidend ist lediglich, dass sie von der Längsachse 3 beabstandet sind und entlang der Längsachse 3 verlaufen.

Die Spankammern 4 erstrecken sich ersichtlich nicht über die gesamte Länge des Werkzeugstabes 1. Der Bereich, über den die Spankammern 4 sich in Richtung der Längsachse 3 gesehen erstrecken, bildet einen Spankammerbereich 5, der übrige Bereich des Werkzeugstabes 1 einen Schaft 6.

Auf Grund der Ausbildung des Werkzeugstabes 1 der Figuren 3 bis 7 als Bohrer weist der Werkzeugstab 1 eine Bohrerspitze 7 auf. Die Bohrerspitze 7 ist in der Regel kegelförmig ausgestaltet.

An der Bohrerspitze 7 sind in den Werkzeugstab 1 Hauptschneidkanten 8 (Hauptschneiden 8) eingebracht. Die Hauptschneidkanten 8 grenzen an die Stirnseiten der Spankammern 4 an. Das Einbringen der Hauptschneidkanten 8 in den Werkzeugstab 1 erfolgt hierbei auf die gleiche Weise wie auch im Stand der Technik. Im Gegensatz zum Stand der Technik sind die Spankammern 4 an der Bohrerspitze 7 nur so weit geschliffen, wie dies zum Einbringen der Hauptschneidkanten 8 erforderlich ist. Der nicht an die Hauptschneidkanten 8 angrenzende Teil der Spankammern 4 ist an der Bohrerspitze 7 nicht geschliffen.

Wie aus Figur 3 und besonders deutlich aus den Figuren 6 und 7 hervorgeht, sind die Spankammern 4 im Bereich der Bohrerspitze 7 parallel zur Längsachse 3 gesehen ein Stück 9 geschliffen. Die Länge dieses Stücks 9 liegt vorzugsweise zwischen der Hälfte und dem Doppelten des Durchmessers des Werkzeugstabes 1. Insbesondere kann die Länge des Stücks 9 zwischen dem 0,8-fachen und dem 1,2-fachen des Durchmessers des Werkzeugstabes 1 liegen.

Wie weiterhin aus den Figuren 3 bis 7 ersichtlich ist, sind in den Werkzeugstab 1 Zusatzschneidkanten 10 (Nebenschneiden 10) eingebracht, welche ebenfalls an die Spankammern 4 angrenzen. Auch das Einbringen der Zusatzschneidkanten 10 erfolgt - wie auch im Stand der Technik - in den bereits gesinterten Werkzeugstab 1. Im Gegensatz zum Stand der Technik ist bei den Zusatzschneidkanten 10 jedoch ebenfalls der Spankammerbereich 4 teilweise ungeschliffen. Insbesondere erfolgt gemäß den Figuren 3 bis 7 das Schleifen der Spankammern 4 nur in der unmittelbaren Nähe der Zusatzschneidkanten 10. Der übrige Bereich der Spankammern 4 bleibt ungeschliffen. Außer in der Nähe der Bohrerspitze 7 (Stichwort: Stück 9) sind die Spankammern 4 daher ausschließlich im Bereich der Zusatzschneidkanten 10 geschliffen.

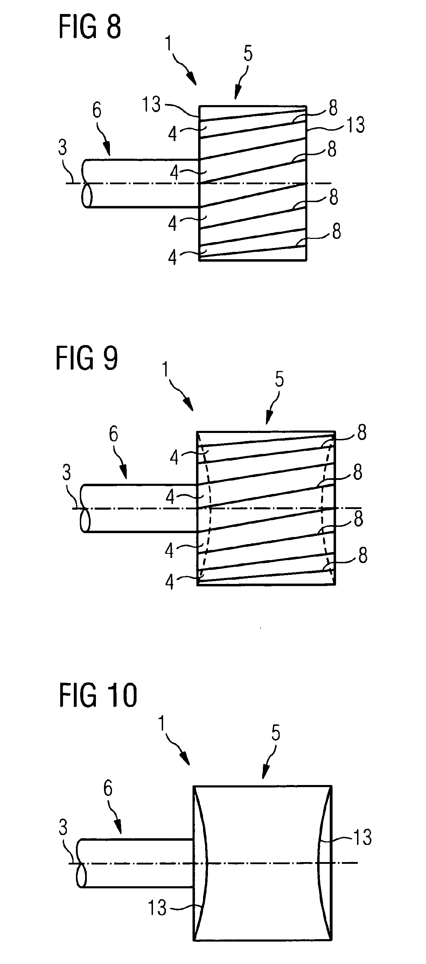

Wie besonders deutlich aus Figur 4 hervorgeht, sind die Zusatzschneidkanten 10 von je zwei Grenzflächen 11, 12 begrenzt. Die Grenzflächen 11 begrenzen hierbei zugleich die Spankammern 4. Die Grenzflächen 12 begrenzen die Spankammern 4 nicht. Die Grenzflächen 12 können alternativ geschliffen oder zumindest teilweise ungeschliffen sein. Insbesondere ist es möglich, bei dem Formling vor dem Sintern im Bereich der Grenzflächen 12 einen Materialabtrag vorzunehmen, so dass der Werkzeugstab 1 nach dem Sintern im Bereich der Grenzflächen 12 einen Durchmesser aufweist, der kleiner als ein Nenndurchmesser ist, welchen die Zusatzschneidkanten 10 von der Längsachse 3 aufweisen. In diesem Fall müssen die Grenzflächen 12 nur im Bereich der Zusatzschneidkanten 10 (und im Bereich der Bohrerspitze 7) geschliffen werden. Der Durchmesser im Bereich der Grenzflächen 12 kann beispielsweise zwischen dem 0,9-fachen und dem 0,95-fachen des Nenndurchmessers liegen. Die vorliegende Erfindung ist nicht auf Werkzeugstäbe 1 beschränkt, die als Bohrer ausgebildet sind. Alternativ kann der Werkzeugstab 1 beispielsweise als Fräskopf ausgebildet sein. Dies wird nachfolgend in Verbindung mit den Figuren 8, 9 und 10 kurz erläutert.

Gemäß Figur 8 weist der Fräskopf 1 ebenfalls den Schaft 6 und den Spankammerbereich 5 auf. Im Spankammerbereich 5 sind in den Werkzeugstab 1 Spankammern 4 eingebracht. Die Hauptschneidkanten 8 grenzen weiterhin an die Spankammern 4 an, verlaufen jedoch ebenso wie die Spankammern 4 beispielsweise spiralförmig um die Längsachse 3 herum. Die Spankammern 4 sind - analog zu der Ausgestaltung des Werkzeugstabes 1 als Bohrer - nur teilweise geschliffen und im Übrigen ungeschliffen.

Wenn der Fräskopf 1 entsprechend Figur 8 eine im Wesentlichen zylindrische Kontur aufweist, muss eine Stirnseite 13 des Fräskopfs 1 in der Regel ebenfalls geschliffen sein. Alternativ ist es gemäß den Figuren 9 und 10 jedoch denkbar, dass der Fräskopf 1 an seinen Stirnseiten 13 nach innen gewölbt ist. In diesem Fall ist es möglich, die Stirnseiten 13 ebenfalls nur im Bereich der Hauptschneidkanten 8 zu schleifen und im Übrigen ungeschliffen zu lassen.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

### Bezugszeichenliste

| | |
|---|---|
| 1 | Werkzeugstab |
| 2 | Werkstück |
| 3 | Längsachse |
| 4 | Spankammern |
| 5 | Spankammerbereich |
| 6 | Schaft |
| 7 | Bohrerspitze |
| 8 | Hauptschneidkanten |
| 9 | Stück |
| 10 | Zusatzschneidkanten |
| 11, 12 | Grenzflächen |
| 13 | Stirnseiten |
| S1 - S6 | Schritte |

## Patentansprüche

1. Herstellungsverfahren für einen aus gesintertem Material bestehenden Werkzeugstab (1), mit folgenden, in der angegebenen Reihenfolge ausgeführten Schritten:
- Aus dem zu sinternden Material wird ein Formling hergestellt, der eine Längsachse (3) aufweist.
- In den Formling wird mindestens eine von der Längsachse (3) beabstandete, entlang der Längsachse (3) verlaufende Spankammer (4) eingebracht.
- Durch Sintern des Formlings wird der Werkzeugstab (1) hergestellt.
- Durch Schleifen wird in den Werkzeugstab (1) mindestens eine an die Spankammer (4) angrenzende Schneidkante (8, 10) eingebracht und der Werkzeugstab (1) durch Schleifen weiter bearbeitet, wobei jedoch die Spankammer (4) ausschließlich in einem Bereich (9) geschliffen wird, der an mindestens eine der Schneidkanten (8, 10) angrenzt, und im Übrigen ungeschliffen bleibt.

2. Herstellungsverfahren nach Anspruch 1,
**dadurch gekennzeichnet,**
**dass** mindestens eine (8) der Schneidkanten (8, 10) stirnseitig des Werkzeugstabes (1) verläuft und dass die Spankammer (4), soweit sie an diese Schneidkante (8) angrenzt, in Richtung der Längsachse (3) gesehen über eine Länge geschliffen wird, die zwischen der Hälfte und dem Doppelten des Durchmessers des Werkzeugstabes (1) liegt, insbesondere zwischen dem 0,8-fachen und dem 1,2-fachen des Durchmessers des Werkzeugstabes (1).

3. Herstellungsverfahren nach Anspruch 2,
**dadurch gekennzeichnet,**
**dass** der Werkzeugstab (1) als Bohrer ausgebildet ist und dass die stirnseitige Schneidkante (8) an der Bohrerspitze (7) angeordnet ist.

4. Herstellungsverfahren nach Anspruch 1, 2 oder 3,
**dadurch gekennzeichnet,**
**dass** mindestens eine der Schneidkanten (8, 10) entlang der Längsachse (3) des Werkzeugstabes (1) verläuft und dass die Spankammer (4), soweit sie an diese Schneidkante (8) angrenzt, nur in einem an diese Schneidkante (8, 10) unmittelbar angrenzenden Bereich geschliffen wird.

5. Herstellungsverfahren nach Anspruch 4,
**dadurch gekennzeichnet,**
**dass** die entlang der Längsachse (3) des Werkzeugstabes (1) verlaufende Schneidkante (8, 10) von zwei Grenzflächen (11, 12) begrenzt ist, dass die eine Grenzfläche (11) zugleich die Spankammer (4) begrenzt und die andere Grenzfläche (12) die Spankammer (4) nicht begrenzt und dass die andere Grenzfläche (12) zumindest teilweise nicht geschliffen wird.

6. Aus gesintertem Material bestehender gebrauchsfertiger Werkzeugstab,
- wobei der Werkzeugstab eine Längsachse (3) aufweist und in den Werkzeugstab mindestens eine von der Längsachse (3) beabstandete, entlang der Längsachse (3) verlaufende Spankammer (4) eingebracht ist,
- wobei der Werkzeugstab mindestens eine an die Spankammer (4) angrenzende, durch Schleifen des bereits gesinterten Werkzeugstabes in den Werkzeugstab eingebrachte Schneidkante (8, 10) aufweist,
**dadurch gekennzeichnet,**
**dass** die Spankammer (4) ausschließlich in einem Bereich (9), der an mindestens eine der Schneidkanten (8, 10) angrenzt, geschliffen ist und im Übrigen ungeschliffen ist.

7. Werkzeugstab nach Anspruch 6,
**dadurch gekennzeichnet,**
**dass** mindestens eine (8) der Schneidkanten (8, 10) stirnseitig des Werkzeugstabes verläuft und dass die Spankammer (4), soweit sie an diese Schneidkante (8) angrenzt, in Richtung der Längsachse (3) gesehen über eine Länge geschliffen ist, die zwischen der Hälfte und dem Doppelten des Durchmessers des Werkzeugstabes liegt, insbesondere zwischen dem 0,8-fachen und dem 1,2-fachen des Durchmessers des Werkzeugstabes.

8. Werkzeugstab nach Anspruch 7,
**dadurch gekennzeichnet,**
**dass** der Werkzeugstab als Bohrer ausgebildet ist und dass die stirnseitige Schneidkante (8) an der Bohrerspitze (7) angeordnet ist.

9. Werkzeugstab nach Anspruch 6, 7 oder 8,
**dadurch gekennzeichnet,**
**dass** mindestens eine der Schneidkanten (8, 10) entlang der Längsachse (3) des Werkzeugstabes verläuft und dass die Spankammer (4), soweit sie an diese Schneidkante (8) angrenzt, nur in einem an diese Schneidkante (8, 10) unmittelbar angrenzenden Bereich geschliffen ist.

10. Werkzeugstab nach Anspruch 9,
**dadurch gekennzeichnet,**
**dass** die entlang der Längsachse (3) des Werkzeugstabes verlaufende Schneidkante (8, 10) von zwei Grenzflächen (11, 12) begrenzt ist, dass die eine Grenzfläche (11) zugleich die Spankammer (4) begrenzt und die andere Grenzfläche (12) die Spankammer (4) nicht begrenzt und dass die andere Grenzfläche (12) zumindest teilweise nicht geschliffen ist.

11. Werkzeugstab nach einem der Ansprüche 6 bis 10,
**dadurch gekennzeichnet,**
**dass** das Material Metall oder eine Metall-Keramik-Mischung ist.

12. Verwendung eines Werkzeugstabes (1) nach einem der Ansprüche 6 bis 11 zur spanenden Bearbeitung eines Werkstücks (2) .

## Claims

1. Production method for a tool bit (1) consisting of sintered material, comprising the following steps performed in the stated sequence:
- a blank having a longitudinal axis (3) is produced from the material to be sintered;
- at least one swarf chamber (4) spaced from the longitudinal axis (3) and extending along the longitudinal axis (3) is formed into the blank;
- the tool bit (1) is produced by sintering the blank; and
- at least one cutting edge (8, 10) adjoining the swarf chamber (4) is formed in the tool bit (1) by grinding and the tool bit (1) is further processed by grinding, wherein, however, the swarf chamber (4) is ground exclusively in a region, which adjoins at least one of the cutting edges (8, 10), and otherwise remains unground.

2. Production method according to claim 1, **characterised in that** at least one (8) of the cutting edges (8, 10) extends at the end face of the tool bit (1) and that the swarf chamber (4), insofar as it adjoins this cutting edge (8) is ground over a length, as seen in the direction of the longitudinal axis (3), lying between half and twice the diameter of the tool bit (1), particularly between 0.8 times and 1.2 times the diameter of the tool bit (1).

3. Production method according to claim 2, **characterised in that** the tool bit (1) is formed as a drill and that the cutting edge (8) at the end face is arranged at the drill tip (7).

4. Production method according to claim 1, 2 or 3, **characterised in that** at least one of the cutting edges (8, 10) extends along the longitudinal axis (3) of the tool bit (1) and that the swarf chamber (4), insofar as it adjoins this cutting edge (8), is ground only in a region directly adjoining this cutting edge (8, 10).

5. Production method according to claim 4, **characterised in that** the cutting edge (8, 10) extending along the longitudinal axis (3) of the tool bit (1) is bounded by two boundary surfaces (11, 12), that one boundary surface (11) at the same time bounds the swarf chamber (4) and the other boundary surface (12) does not bound the swarf chamber (4) and that the other boundary surface (12) is at least partly unground.

6. Ready-for-use tool bit consisting of sintered material,
- wherein the tool bit has a longitudinal axis (3) and at least one swarf chamber (4) spaced from the longitudinal axis (3) and extending along the longitudinal axis (3) is formed in the tool bit,
- wherein the tool bit has at least one cutting edge (8, 10) adjoining the swarf chamber (4) and formed in the tool bit by grinding the already sintered tool bit,
**characterised in that** the swarf chamber (4) is ground exclusively in a region (9) adjoining at least one of the cutting edges (8, 10) and otherwise is unground.

7. Tool bit according to claim 6, **characterised in that** at least one (8) of the cutting edges (8, 10) extends at the end face of the tool bit and that the swarf chamber (4), insofar as it adjoins this cutting edge (8), is ground over a length, as seen in the direction of the longitudinal axis (3), lying between half and twice the diameter of the tool bit, particularly between 0.8 times and 1.2 times the diameter of the tool bit.

8. Tool bit according to claim 7, **characterised in that** the tool bit is constructed as a drill and that the cutting edge (8) at the end face is arranged at the drill tip (7).

9. Tool bit according to claim 6, 7 or 8, **characterised in that** at least one of the cutting edges (8, 10) extends along the longitudinal axis (3) of the tool bit and that the swarf chamber (4), insofar as it adjoins this cutting edge (8), is ground only in a region directly adjoining this cutting edge (8, 10).

10. Tool bit according to claim 9, **characterised in that** the cutting edge (8, 10) extending along the longitudinal axis (3) of the tool bit is bounded by two boundary surfaces (11, 12), that one boundary surface (11) at the same time bounds the swarf chamber (4) and the other boundary surface (12) does not bound the swarf chamber (4) and that the other boundary surface (12) at least in part is unground.

11. Tool bit according to any one of claims 6 to 10, **characterised in that** the material is metal or a metal-ceramic mixture.

12. Use for tool bit (1) according to any one of claims 6 to 11 for machining of a workpiece (2).

## Revendications

1. Procédé de fabrication pour une tige d'outil (1) composée d'un matériau fritté, comprenant les étapes suivantes, exécutées dans l'ordre indiqué :
- fabriquer une ébauche ayant un axe longitudinal (3), à partir du matériau à fritter,
- introduire dans l'ébauche au moins un logement de copeaux (4) s'étendant suivant l'axe longitudinal (3) en étant espacé de l'axe longitudinal (3),
- fabriquer la tige d'outil (1) par frittage de l'ébauche,
- introduire par rectification dans la tige d'outil (1) au moins une arête de coupe (8, 10) adjacente au logement de copeaux (4) et continuer à usiner la tige d'outil (1) par rectification, dans lequel le logement de copeaux (4) est toutefois rectifié uniquement dans une zone (9) adjacente à au moins l'une des arêtes de coupe (8, 10) et reste par ailleurs non rectifié.

2. Procédé de fabrication selon la revendication 1, **caractérisé en ce qu'**au moins l'une (8) des arêtes de coupe (8, 10) s'étend sur la face frontale de la tige d'outil (1), et **en ce que** le logement de copeaux (4), dans la mesure où il est adjacent à cette arête de coupe (8), est rectifié, vu dans la direction de l'axe longitudinal (3), sur une longueur comprise entre la moitié et le double du diamètre de la tige d'outil (1), en particulier entre 0,8 fois et 1,2 fois le diamètre de la tige d'outil (1).

3. Procédé de fabrication selon la revendication 2, **caractérisé en ce que** la tige d'outil (1) est réalisée comme un foret, et **en ce que** l'arête de coupe (8) frontale est disposée au niveau de la mèche (7).

4. Procédé de fabrication selon la revendication 1, 2 ou 3, **caractérisé en ce qu'**au moins l'une des arêtes de coupe (8, 10) s'étend suivant l'axe longitudinal (3) de la tige d'outil (1), et **en ce que** le logement de copeaux (4), dans la mesure où il est adjacent à cette arête de coupe (8), est rectifié uniquement dans une zone directement adjacente à cette arête de coupe (8, 10).

5. Procédé de fabrication selon la revendication 4, **caractérisé en ce que** l'arête de coupe (8, 10) s'étendant suivant l'axe longitudinal (3) de la tige d'outil (1) est délimitée par deux surfaces limites (11, 12), **en ce que** l'une surface limite (11) délimite en même temps le logement de copeaux (4) et l'autre surface limite (12) ne délimite pas le logement de copeaux (4), et **en ce que** l'autre surface limite (12) n'est pas rectifiée, au moins en partie.

6. Tige d'outil prête à l'emploi, composée d'un matériau fritté,
- dans laquelle la tige d'outil présente un axe longitudinal (3), et dans la tige d'outil est introduit au moins un logement de copeaux (4) s'étendant suivant l'axe longitudinal (3) en étant espacé de l'axe longitudinal (3),
- dans laquelle la tige d'outil présente au moins une arête de coupe (8, 10) adjacente au logement de copeaux (4) et introduite dans la tige d'outil par rectification de la tige d'outil déjà frittée,
**caractérisée en ce que** le logement de copeaux (4) est rectifié uniquement dans une zone (9) adjacente à au moins l'une des arêtes de coupe (8, 10) et par ailleurs non rectifié.

7. Tige d'outil selon la revendication 6, **caractérisée en ce qu'**au moins l'une (8) des arêtes de coupe (8, 10) s'étend sur la face frontale de la tige d'outil, et **en ce que** le logement de copeaux (4), dans la mesure où il est adjacent à cette arête de coupe (8), est rectifié, vu dans la direction de l'axe longitudinal (3), sur une longueur comprise entre la moitié et le double du diamètre de la tige d'outil, en particulier entre 0,8 fois et 1,2 fois le diamètre de la tige d'outil.

8. Tige d'outil selon la revendication 7, **caractérisée en ce que** la tige d'outil est réalisée comme un foret, et **en ce que** l'arête de coupe (8) frontale est disposée au niveau de la mèche (7).

9. Tige d'outil selon la revendication 6, 7 ou 8, **caractérisée en ce qu'**au moins l'une des arêtes de coupe (8, 10) s'étend suivant l'axe longitudinal (3) de la tige d'outil, et **en ce que** le logement de copeaux (4), dans la mesure où il est adjacent à cette arête de coupe (8), est rectifié uniquement dans une zone directement adjacente à cette arête de coupe (8, 10).

10. Tige d'outil selon la revendication 9, **caractérisée en ce que** l'arête de coupe (8, 10) s'étendant suivant l'axe longitudinal (3) de la tige d'outil est délimitée par deux surfaces limites (11, 12), **en ce que** l'une surface limite (11) délimite en même temps le logement de copeaux (4) et l'autre surface limite (12) ne délimite pas le logement de copeaux (4), et **en ce que** l'autre surface limite (12) n'est pas rectifiée, au moins en partie.

11. Tige d'outil selon l'une quelconque des revendications 6 à 10, **caractérisée en ce que** le matériau est un métal ou un mélange métal/céramique.

12. Utilisation d'une tige d'outil (1) selon l'une quelconque des revendications 6 à 11 pour l'usinage par enlèvement de copeaux d'une pièce à travailler (2).
